Europäisches Patentamt

European Patent Office

Office européen des brevets

(19)

(11) **EP 0 986 895 B1**

(12) **EUROPÄISCHE PATENTSCHRIFT**

(45) Veröffentlichungstag und Bekanntmachung des Hinweises auf die Patenterteilung:
**23.01.2002 Patentblatt 2002/04**

(51) Int Cl.7: **H04N 1/409**, G06T 5/40

(21) Anmeldenummer: **98934808.1**

(86) Internationale Anmeldenummer:
**PCT/DE98/01447**

(22) Anmeldetag: **27.05.1998**

(87) Internationale Veröffentlichungsnummer:
**WO 98/56166 (10.12.1998 Gazette 1998/49)**

(54) **VERFAHREN ZUR SCHÄRFEKORREKTUR VON BILDWERTEN**

METHOD FOR CORRECTING THE SHARPNESS OF IMAGE VALUES

PROCEDE POUR CORRIGER LA NETTETE DE VALEURS D'IMAGE

(84) Benannte Vertragsstaaten:
**CH DE ES FR GB IT LI**

(30) Priorität: **02.06.1997 DE 19722761**

(43) Veröffentlichungstag der Anmeldung:
**22.03.2000 Patentblatt 2000/12**

(73) Patentinhaber: **Heidelberger Druckmaschinen Aktiengesellschaft**
**69115 Heidelberg (DE)**

(72) Erfinder: **WEIDLICH, Ernst-Rudolf, Gottfried**
**D-24159 Kiel (DE)**

(56) Entgegenhaltungen:
**EP-A- 0 392 753          EP-A- 0 513 749**
**GB-A- 2 134 352          US-A- 5 471 987**

EP 0 986 895 B1

**Beschreibung**

Die Erfindung bezieht sich auf das Gebiet der elektronischen Reproduktionstechnik und betrifft ein Verfahren zur Schärfekorrektur von Bildwerten.

Unter Bildwerten sollen allgemein sowohl analoge oder digitale Bildwerte als auch analoge oder digitale Farbwerte verstanden werden.

In der Reproduktionstechnik werden durch punkt- und zeilenweise optoelektronsche Abtastung von Vorlagen in einem Scanner Bildwerte gewonnen, die digitalisiert und als digitale Bildwerte weiterverarbeitet werden. Zur verbesserten Wiedergabe von Konturen in der Reproduktion muß oft eine Schärfekorrektur, auch mit Kontrastkorrektur bezeichnet, durch eine elektronische Unscharfmaskierung durchgeführt werden, die analog bei der Vorlagenabtastung mittels einer Umfeldblende oder digital durch Rechnung anhand der gespeicherten digitalen Bildwerte erfolgen kann.

Ein Verfahren zur elektronischen Schärfekorrektur ist beispielsweise aus der US-A-4 844 288 bekannt. Bei diesem bekannten Verfahren wird zunächst für jeden Bildpunkt aus den Bildwerten eines den jeweiligen Bildpunkt umgebenden Umfeldes ein Umfeldwert berechnet. Für jeden Bildpunkt wird dann die Differenz aus Umfeldwert und Bildwert des jeweiligen Bildpunktes berechnet. Zur Schärfekorrektur wird schließlich für jeden Bildpunkt der Differenzwert zu dem Bildwert des jeweiligen Bildpunktes in wählbarer Stärke als Schärfekorrekturwert hinzuaddiert, um einen kontrastkorrigierten Bildwert zu erhalten.

Durch die elektronische Unscharfmaskierung entsteht aufgrund der sich ausbildenden Signalüberhöhungen ein steilerer Verlauf der Bildwerte im Bereich einer Kontur sofern die Signalüberhöhungen den Originalwertebereich der Bildwerte überschreiten können. Wird die Ausbildung von Signalüberhöhungen aufgrund eines begrenzten Wertebereiches verhindert, läßt sich in nachteiliger Weise kein steiler Signalverlauf im Bereich einer Kontur erzielen.

Aus der US-A-5 471 987 ist ein Verfahren zur Komprimierung des Dynamikbereiches eines Strahlungsbildes bekannt, bei dem der Kompressionsfaktor entsprechend dem Dynamikbereich eines gerasterten Bildes berechnet wird. Die wird durch die Berechnung eines Mittelwertes über eine Fläche im Umfeld eines Rasterpunktes erreicht.

Aufgabe der Erfindung ist es daher, ein Verfahren zur Schärfekorrektur von Bildwerten derart zu verbessern, daß eine optimale Schärfekorrektur auch bei einem begrenzten Wertebereich gewährleistet ist

Diese Aufgabe wird durch die Merkmale des Anspruchs 1 gelöst. Vorteilhafte Weiterbildungen und Ausgestaltungen sind in den Unteransprüchen angegeben.

Die Erfindung wird nachfolgend anhand der Fig. 1 bis 6 näher erläutert.

Es zeigen:

Fig. 1    ein prinzipielles Blockschaltbild einer Bildbearbeitungsanlage zur Schärfekorrektur,

Fig. 2    eine grafische Darstellung zur Komprimierung von Bildwerten,

Fig. 3    eine grafische Darstellung zur Schärfekorrektur von Bildwerten,

Fig. 4    eine grafische Darstellung zur Dekomprimierung von Bildwerten,

Fig. 5    eine grafische Darstellung einer Komprimierungsfunktion und

Fig. 6    eine grafische Darstellung einer Dekomprimierungsfunktion.

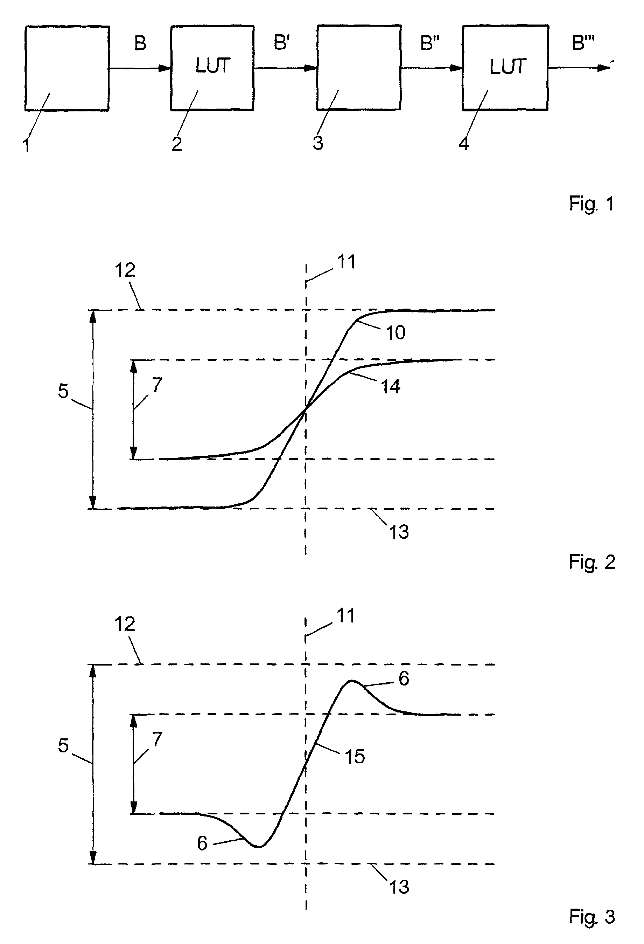

Fig. 1 zeigt ein prinzipielles Blockschaltbild zur erfindungsgemäßen Schärfekorrektur von Bildwerten (B) am Beispiel einer digitalen Signalverarbeitung. Das Blockschaltbild besteht prinzipiell aus einem Bilddatenspeicher (1), einer Komprimierungsstufe (2), einer Schärfekorrekturstufe (3) und einer Dekomprimierungstufe (4), die in Reihe geschaltet sind.

Der Bilddatenspeicher (1) enthält digitale Bildwerte (B), die beispielsweise durch punkt- und zeilenweise optoelektronische Abtastung einer Vorlage mittels eines Scanners und durch anschließende Analog/Digital-Wandlung gewonnen wurden.

Die digitalen Bildwerte (B) haben beispielsweise bei einer Wortlänge von 8 Bit einen Originalwertebereich (5) von B = 0 bis B = 255.

Kann der Originalwertebereich (5) nicht überschritten werden, können sich bei einer herkömmlichen Schärfekorrektur keine Signalüberhöhungen (6) ausbilden und es kann kein steiler Verlauf der Bildwerte im Bereich einer Kontur erzielt wird.

Aus diesem Grunde werden die im Originalwertebereich (5) vorliegenden Bildwerte (B) erfindungsgemäß in einem ersten Schritt vor der Schärfekorrektur auf einen Zwischenwertebereich (7) komprimiert, der so bemessen ist, daß die bei der anschließenden Schärfekorrektur der komprimierten Bildwerte (B') erzeugten Signalüberhöhungen (6) innerhalb des Originalwertebereiches (5) liegen.

Die Komprimierung der Bildwerte (B) erfolgt in der Komprimierungsstufe (2), in der die Bildwerte (B) nach einer beispielsweise linearen Komprimierungsfunktion (8) in die Bildwerte (B') des Zwischenwertebereiches (7) umgesetzt werden. Die Komprimierungsstufe (2) ist beispielsweise als Tabellenspeicher ausgebildet, in dem die Komprimierungsfunktion als Tabelle (LUT = Look-Up-Table) abgelegt ist.

Die Komprimierung auf den Zwischenwertebereich (7) kann für alle in dem Bilddatenspeicher (1) abgelegten Bildwerte (B) durchgeführt werden. Alternativ dazu können die aus dem Bilddatenspeicher (1) ausgelesenen Bildwerte (B) auf Konturen hin untersucht werden. In diesem Fall wird die Komprimierung jeweils nur für diejenigen Bildwerte (B') durchgeführt, die zu einer festgestellten Kontur gehören.

In einem zweiten Schritt erfolgt dann die Schärfekorrektur der in den Zwischenwertebereich (7) komprimierten Bildwerte (B') durch eine elektronische Unscharfmaskierung in die schärfekorrigierten Bildwerte (B"). Die Schärfekorrektur wird in der Schärfekorrekturstufe (2) durchgeführt.

Zunächst wird für jeden zentralen Bildpunkt mit dem Bildwert (B') ein Umfeld definiert, das mehrere Bildpunkte mit den Bildwerten $B'_1$ bis $B'_n$ umfaßt. Das Umfeld kann beispielsweise aus 3 x 3 Bildpunkten mit den Bildwerten $B'_1$ bis $B'_8$ bestehen.

Den Bildpunkten des Umfeldes sind Gewichtungskoeffizienten $k_1$ bis $k_n$ zugeordnet, die abrufbar in der Schärfekorrekturstufe (2) gespeichert sind.

Für jeden aktuellen Bildpunkt wird dann aus den Bildwerten $B'_1$ bis $B'_n$ des jeweiligen Umfeldes ein Umfeldwert ($B'_U$) berechnet, indem die Bildwerte $B'_1$ bis $B'_n$ gemäß der nachfolgenden Gleichung mit den Gewichtungskoeffizienten $k_1$ bis $k_n$ gewichtet und die gewichteten Bildwerte addiert werden.

$$B'_U = k_1 \, B'_1 + k_2 B'_2 + k_3 B'_3 + \cdots\cdots + k_n \, B'_n$$

Für jeden Bildpunkt wird dann der Differenzwert ($B' - B'_U$) zwischen dem Bildwert (B') des zentralen Bildpunktes und dem berechneten Umfeldwert ($B'_U$) gebildet und der Differenzwert ($B' - B'_U$) zu dem Bildwert (B') des zentralen Bildpunktes in wählbarer Stärke als Schärfekorrekturwert gemäß nachfolgender Gleichung hinzuaddiert, um den schärfekorrigierten Bildwert (B") zu erhalten.

$$B'' = B' + c \, (B' - B'_U)$$

Durch geeignete Gewichtungskoeffizienten (k) kann die Schärfekorrektur der Bildwerte in vorteilhafter Weise in einer wählbaren Vorzugsrichtung erfolgen.

Ein Verfahren zur elektronischen Unscharfmaskierung wird beispielsweise in der US-PS 4,844,288 ausführlich beschrieben.

In einem dritten Schritt werden abschließend die komprimierten und in der Schärfe korrigierten Bildwerte (B") auf den Originalwertebereich (5) dekomprimiert, um die schärfekorrigierten Bildwerte (B''') für die Weiterverarbeitung zu erhalten. Die Dekomprimierung der Bildwerte (B") erfolgt in der Dekomprimierungsstufe (4), in der die Bildwerte (B") des Zwischenwertebereiches (7) nach einer z.B. ebenfalls linearen Dekomprimierungsfunktion (9) in die Bildwerte (B''') des Originalwertebereiches (5) zurückgewandelt werden. Die Dekomprimierungsstufe (4) ist ebenfalls als Tabellenspeicher ausgebildet, in dem die Dekomprimierungsfunktion (9) als Tabelle (LUT) abgelegt ist.

Fig. 2 zeigt in einer grafischen Darstellung die Komprimierung der Bildwerte (B) in die Bildwerte (B') des Zwischenwertebereiches (7). Der Verlauf (10) stellt die unkorrigierten Bildwerte (B) im Bereich einer Kontur (11) zwischen einem unteren Grenzwert (12) und einem oberen Grenzwert (13) dar. Die Grenzwerte (12, 13) markieren den Originalwertebereich (5). Der Verlauf (14) zeigt die auf den Zwischenwertebereich (7) komprimierten Bildwerte (B').

Fig. 3 zeigt in einer grafischen Darstellung die schärfekorrigierten Bildwerte (B") im Zwischenwertebereich (7) als Verlauf (15). Es ist ersichtlich, daß jetzt die Signalüberhöhungen (6) der schärfekorrigierten Bildwerte (B") innerhalb des Originalwertebereiches (5) liegen und der Signalanstieg der Bildwerte (B") im Bereich der Kontur (11) steiler als der entsprechende Signalanstieg als im Verlauf (14) der unkorrigierten Bildwerte (B') in Fig. 2 ist.

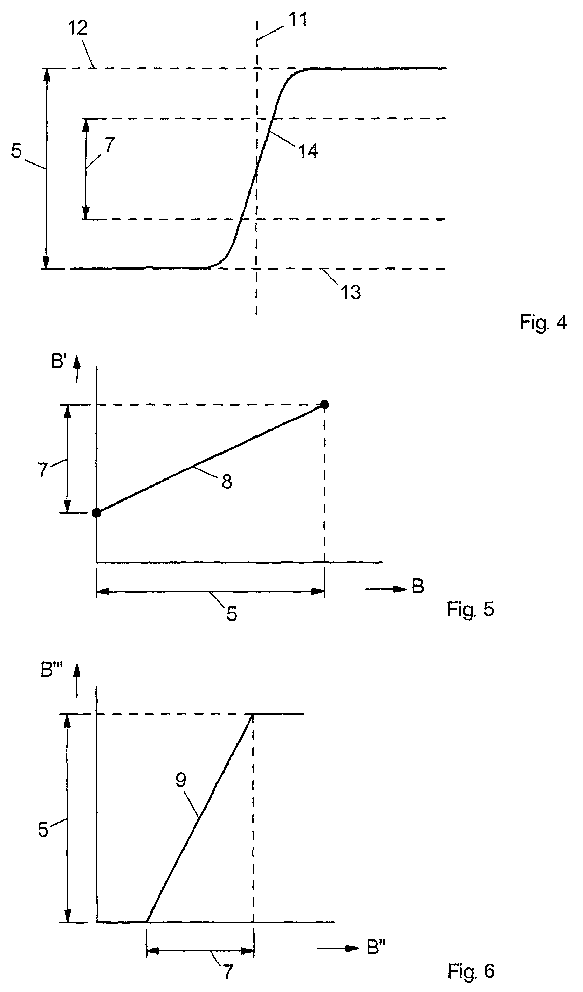

Fig. 4 zeigt in einer weiteren grafischen Darstellung das Ergebnis des erfindungsgemäßen Verfahrens, nämlich den Verlauf (16) der schärfekorrigierten und auf den Originalwertebereich (5) dekomprimierten Bildwerte (B'''), wobei die Dekomprimierung derart erfolgt ist, daß die Signalüberhöhungen (6) zwar abgeschnitten sind, der steilere Signalanstieg im Verlauf (16) aber in vorteilhafter Weise erhalten bleibt.

Fig. 5 zeigt in einer grafischen Darstellung die Komprimierung der Bildwerte (B) des Originalwertebereiches (5) in die Bildwerte (B') des Zwischenwertebereiches (7) anhand der linearen Komprimierungsfunktion (8).

Fig. 6 zeigt in einer grafischen Darstellung die Dekomprimierung der komprimierten und schärfekorrigierten Bildwerte (B') in die Bildwerte (B") des Originalwertebereiches (5) anhand der linearen Dekomprimierungsfunktion (9).

Das erfindungsgemäße Verfahren zur Schärfekorrektur von Bildwerten kann in bevorzugter Weise bei der bildlinienweisen Gravur von Druckformen für den Tiefdruck mittels eines durch die Bildwerte gesteuerten Gravierorgans als Schneidwerkzeug verwendet werden. In diesem Fall wird die Vorzugsrichtung für die Schärfekorrektur gleich der Richtung der Bildlinien gewählt wird.

**Patentansprüche**

1. Verfahren zur Schärfekorrektur von Bildwerten, bei dem

   - die bildpunktweise erzeugten Bildwerte (B) in einem Originalwertebereich (5) vorliegen,
   - Umfeldwerte ($B_U$) für die einzelnen Bildpunkte durch Auswertung jeweils eines um die einzelnen Bildpunkte liegenden Umfeldes gewonnen werden,

- Differenzwerte aus den Bildwerten (B) und dem Umfeldwerten (B$_U$) gebildet werden und
- die Differenzwerte den Bildwerten (B) in wählbarer Stärke als Schärfekorrektursignal überlagert werden, um in der Schärfe korrigierte Bildwerte (B''') zu erhalten, **dadurch gekennzeichnet, daß**
- das im Originalwertebereich (5) vorliegende Bildwerte (B) vor der Schärfekorrektur auf einen Zwischenwertebereich (7) komprimiert werden, der so bemessen ist, daß die bei der anschließenden Schärfekorrektur der komprimierten Bildwerte (B') erzeugten Signalüberhöhungen (6) innerhalb des Originalwertebereiches (5) liegen,
- die komprimierten Bildwerte (B') der Schärfekorrektur unterzogen werden und
- die komprimierten und schärfekorrigierten Bildwerte (B'') auf den Originalwertebereich (5) dekomprimiert werden, um die schärfekorrigierten Bildwerte (B''') zu erhalten.

2. Verfahren nach Anspruch 1, **dadurch gekennzeichnet, daß** die Kompression der Bildwerte (B) in die Bildwerte (B') mittels einer Kompressionsfunktion (8) erfolgt.

3. Verfahren nach Anspruch 1 oder 2, **dadurch gekennzeichnet, daß** die Dekompression der Bildwerte (B'') in die Bildwerte (B''') mittels einer Dekompressionsfunktion (9) erfolgt.

4. Verfahren nach mindestens einem der Ansprüche 1 bis 3, **dadurch gekennzeichnet, daß** die Kompressionsfunktion (8) und die Dekompressionsfunktion (9) lineare Funktionen sind.

5. Verfahren nach mindestens einem der Ansprüche 1 bis 4, **dadurch gekennzeichnet, daß** die Kompressionsfunktion (8) und die Dekompressionsfunktion (9) als Tabellen (LUT) gespeichert sind.

6. Verfahren nach mindestens einem der Ansprüche 1 bis 5, **dadurch gekennzeichnet, daß**

- die im Originalwertebereich (5) vorliegenden Bildwerte (B) auf Konturen untersucht werden und
- die Komprimierung der zu einer Kontur gehörenden Bildwerte (B) nur dann durchgeführt wird, wenn eine Kontur festgestellt wird.

7. Verfahren nach mindestens einem der Ansprüche 1 bis 6, **dadurch gekennzeichnet, daß** die Schärfekorrektur der Bildwerte (B) in einer wählbaren Vorzugsrichtung durchgeführt wird.

8. Verfahren nach mindestens einem der Ansprüche 1 bis 7, **dadurch gekennzeichnet, daß** die in dem jeweilige Umfeld liegenden Bildwerte (B) mit Gewichtungskoeffizienten (k) gewichtet und die gewichteten Bildwerte addiert werden, um die Umfeldwerte (B$_U$) zu erhalten.

9. Verfahren nach Anspruch 8, **dadurch gekennzeichnet, daß** die Vorzugsrichtung der Schärfekorrektur durch Wahl der Gewichtungskoeffizienten (k) festgelegt wird.

10. Verfahren nach einem der Ansprüche 1 bis 9, **dadurch gekennzeichnet, daß**

- das Verfahren zur Schärfekorrektur von Bildwerten bei der bildlinienweisen Gravur von Druckformen mittels eines durch die Bildwerte gesteuerten Gravierorgans als Schneidwerkzeug verwendet wird und
- die Vorzugsrichtung für die Schärfekorrektur gleich der Richtung der Bildlinien gewählt wird.

## Claims

1. Method for correcting the sharpness of image values, wherein

- the image values (B) produced for individual image dots lie in an original value range (5),
- surround field values (B$_U$) for the individual image dots are obtained by evaluating a field surrounding each individual image dot,
- difference values are formed from the image values (B) and the surround field values (B$_U$) and
- the difference values are superimposed on the image values (B) in selectable strength as a sharpness correction signal to yield image values (B''') corrected in sharpness, **characterized in that**
- the image values (B) lying in the original value range (5) are compressed, before the sharpness correction, to an intermediate value range (7) which is set so that the signal excursions (6) produced in the ensuing sharpness correction of the compressed image values (B') lie within the original value range (5),
- the compressed image values (B') are subjected to the sharpness correction and
- the compressed and sharpness-corrected image values (B'') are decompressed to the original value range (5) to yield the sharpness-corrected image values (B''').

2. Method according to Claim 1, **characterized in that** the compression of the image values (B) into the image values (B') is performed by means of a compression function (8).

3. Method according to Claim 1 or 2, **characterized in that** the decompression of the image values (B'') into the image values (B''') is performed by means of a decompression function (9).

4. Method according to at least one of Claims 1 to 3, **characterized in that** the compression function (8) and decompression function (9) are linear functions.

5. Method according to at least one of Claims 1 to 4, **characterized in that** the compression function (8) and decompression function (9) are stored as tables (LUT).

6. Method according to at least one of Claims 1 to 5, **characterized in that**

   - the image values (B) lying in the original value range (5) are examined for contours and
   - compression of the image values (B) belonging to a contour is performed only if a contour is detected.

7. Method according to at least one of Claims 1 to 6, **characterized in that** the sharpness correction of the image values (B) is performed in a selectable preferential direction.

8. Method according to at least one of Claims 1 to 7, **characterized in that** the image values (B) lying in each surround field are weighted with weighting coefficients (k) and the weighted image values are summed to obtain the surround field values $(B_U)$.

9. Method according to Claim 8, **characterized in that** the preferential direction of the sharpness correction is determined by the choice of weighting coefficients (k).

10. Method according to any one of Claims 1 to 9, **characterized in that**

    - the method for correcting the sharpness of image values is used in the line-by-line engraving of formes by means of an engraving head controlled by the image values as cutting tool and
    - the preferential correction chosen for the sharpness correction is the same as the direction of the image lines.


## Revendications

1. Procédé de correction de la netteté de valeurs d'image selon lequel

   - on dispose des valeurs d'image (B), générées point par point dans une plage de valeurs originales (5),
   - on récupère des valeurs de champ environnant $(B_u)$ pour les différents points images par l'exploitation du champ environnant de chaque point image,
   - on forme des valeurs de différences à partir des valeurs d'image (B) et des valeurs de champ environnant $(B_U)$ et
   - on combine les valeurs de différences aux valeurs d'image (B) selon des intensités choisies comme signal de correction de netteté pour obtenir les valeurs d'image (B'''), dont la netteté est corrigée,

   **caractérisé en ce qu'**

   - on comprime les valeurs d'image (B) existant dans la plage des valeurs d'origine (B) avant la correction de netteté dans une plage de valeurs intermédiaires (7) dimensionnées pour que les dépassements de signal générés lors de la correction consécutive de la netteté des valeurs d'image comprimées (B'), se situent à l'intérieur de la plage des valeurs d'origine (5),
   - on soumet les valeurs d'image comprimées (B') à une correction de netteté et
   - on décomprime les valeurs d'image comprimées et corrigées en netteté (B'') vers la plage des valeurs d'origine (5) pour obtenir des valeurs d'image de netteté corrigée (B''').

2. Procédé selon la revendication 1, **caractérisé en ce qu'** on effectue la compression des valeurs d'image (B) en valeurs d'image (B') par une fonction de compression (8).

3. Procédé selon la revendication 1 ou 2, **caractérisé en ce qu'** on effectue la décompression des valeurs d'image (B'') en valeurs d'image (B''') par une fonction de décompression.

4. Procédé selon l'une quelconque des revendications 1 à 3, **caractérisé en ce que** la fonction de compression (8) et la fonction de décompression (9) sont des fonctions linéaires.

5. Procédé selon l'une quelconque des revendications 1 à 4, **caractérisé en ce que** la fonction de compression (8) et la fonction de décompression (9) sont mémorisées sous forme de tableaux (LUT).

**6.** Procédé selon l'une quelconque des revendications 1 à 4, **caractérisé en ce qu'**

on examine le contour des valeurs d'image (B) de la zone de valeurs d'image d'origine (5) et on effectue la compression des valeurs d'image (B) appartenant à un contour seulement si un contour a été constaté.

**7.** Procédé selon l'une quelconque des revendications 1 à 6, **caractérisé en ce qu'** on effectue la correction de netteté des valeurs d'image (B) dans une direction préférentielle sélectionnée.

**8.** Procédé selon l'une quelconque des revendications 1 à 7, **caractérisé en ce qu'** on pondère les valeurs d'image (B) situées dans le champ environnant respectif avec des coefficients de pondération (k) et on additionne des valeurs d'image pondérées pour obtenir les valeurs de champ environnant ($B_U$).

**9.** Procédé selon la revendication 8, **caractérisé en ce qu'** on fixe la direction préférentielle de la correction de netteté par le choix des coefficients de pondération (k).

**10.** Procédé selon l'une quelconque des revendications 1 à 9, **caractérisé en ce qu'**

on applique le procédé de correction de netteté de valeurs d'image pour la gravure de lignes d'image de matrices d'impression à l'aide d'un organe de gravure comme outil de coupe, commandé par les valeurs d'image et on choisit la direction préférentielle pour la correction de netteté égale à la direction des lignes d'image.

Fig. 1

Fig. 2

Fig. 3

Fig. 4

Fig. 5

Fig. 6